(19) **Europäisches Patentamt**
**European Patent Office**
**Office européen des brevets**

(11) **EP 4 506 862 A1**

(12) **EUROPEAN PATENT APPLICATION**

(43) Date of publication:
**12.02.2025 Bulletin 2025/07**

(21) Application number: **24163901.2**

(22) Date of filing: **15.03.2024**

(51) International Patent Classification (IPC):
**G06N 10/20** (2022.01)   **G06N 3/042** (2023.01)
**G06N 10/60** (2022.01)   **G06N 3/084** (2023.01)
**G06N 10/70** (2022.01)

(52) Cooperative Patent Classification (CPC):
**G06N 10/20; G06N 3/042; G06N 3/084;**
**G06N 10/60; G06N 10/70**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.08.2023 EP 23020377**

(71) Applicant: **Kipu Quantum GmbH**
**76137 Karlsruhe (DE)**

(72) Inventor: **The designation of the inventor has not yet been filed**

(74) Representative: **Hoppe, Georg Johannes**
**Darani Anwaltskanzlei**
**Hohenzollerndamm 117**
**14199 Berlin (DE)**

(54) **METHOD FOR SOLVING AN OPTIMIZATION PROBLEM IN ADIABATIC QUANTUM COMPUTING**

(57)     The invention pertains to a computer-implemented method for solving an optimization problem using an analog quantum computer. The method comprises the steps of:

(a) training a Physics-informed Neural Network (PINN) using a plurality of training samples to address a Counter-Diabatic driving problem in a quantum system, wherein training the PINN comprises:
- defining a temporal domain as the input of the PINN,
- constructing the PINN on the basis of the temporal domain,
- obtaining outputs from the PINN and derivating them,
- updating the temporal domain with derivated outputs; and

(b) obtaining a set of counterdiabatic terms as the solution for the counter-diabatic driving problem from the PINN;
(c) differentiating at least one partial differential equation characterizing a time-dependent behavior of the system;
(d) minimizing a loss function; and
(e) solving, using the set of counterdiabatic terms, the optimization problem.

Figure 1

EP 4 506 862 A1

**Description**

The invention relates to quantum computing. Certain aspects of the invention are defined in the appended independent claims. Certain embodiments of the invention are defined in the dependent claims.

The invention also relates to a method, in particular to a computer-implemented method for counter-diabatic (CD) driving protocols as described herein. Counter-diabatic driving is a technique in quantum control theory designed to counteract nonadiabatic excitations and guide a system to follow its instantaneous energy eigenstates.

In particular embodiments, the method involves the use of at least one Physics-Informed Neural Network or PINN, that allow to obtain optimal results from the physical observables relevant to a given problem, including the external parameterization in time (known as a scheduling function), the gauge potential or operator involving the non-adiabatic terms, the temporal evolution of the energy levels of the system as well as the Pauli matrix decomposition of the gauge potential.

The invention can be applied to any optimization problem as the method of the invention is applicable to any problem in science, such as physics, in particular obtaining the CD-terms and the temporal dependence of $\lambda(t)$, a parameter that guides the adiabatic evolution of the Hamiltonian. Any optimization problem that can be formulated in terms of a Hamiltonian can be benefited from the invention, such as applications in chemistry, physics and finance.

In certain embodiments of the invention, the non-adiabatic operator is decomposed into tensor products of Pauli and identity matrices, allowing for the implementation of the method in a quantum computer.

The invention allows to obtain the optimal configuration of counterdiabatic (CD) quantum computing, specifically by determining the CD-terms. In certain embodiments of the method of the invention, an appropriate loss function is defined that corresponds with the optimal configuration of CD terms that are to be minimized. In certain embodiments, three terms of losses may be used, for least action, adiabaticity and hermiticity, respectively. In certain embodiments, the coefficients in Pauli matrices and/or identity matrices are decomposed for its implementation in a quantum computer.

**Short description of the Invention**

This summary is provided to introduce a selection of concepts in a simplified form that are further described below in a more detailed description and the examples. This summary is not intended to identify key features of the invention, nor is it intended to be used to limit the scope of the invention.

The object of the present invention is to provide a method for solving an optimization problem, in particular in a chemical system. The invention solves this problem.

In certain embodiments, the invention solves this problem by defining a loss function that corresponds with the optimal configuration of CD terms that must be minimized. It allows to obtain the optimal configuration of counterdiabatic (CD) quantum computing, specifically by determining the CD-terms.

In a first aspect, the invention relates to a method, in particular to a computer-implemented method for solving an optimization problem, in particular in a chemical system using a quantum computer.

The invention is applicable to any quantum computer. Therefore, it is mentioned that the method can be applied to quantum computers with "N" number of qubits, where "N" is any integer number.

In certain embodiments, the method comprises some or all of the following steps:

(a) training a Physics-Informed Neural Network (PINN) using a plurality of training samples to address a Counter-Diabatic driving problem in a quantum system, wherein training the PINN comprises

- defining a temporal domain as the input of the PINN,
- constructing the PINN on the basis of the temporal domain,
- obtaining outputs from the PINN and derivating them,
- optionally, updating the temporal domain with derivated outputs, in particular until a maximum number of iterations is performed or desired convergence is reached;
  and

(b) obtaining a set of counterdiabatic terms as the solution for the counter-diabatic driving problem from the PINN;

(c) differentiating at least one partial differential equation characterizing a time-dependent behavior of the chemical system;

(d) minimizing a loss function and

(e) solving, using the set of counterdiabatic terms, to solve the optimization problem, in particular in a chemical system.

In certain embodiments, the training samples are randomly generated input space used to train a physics-informed loss-dependent neural network.

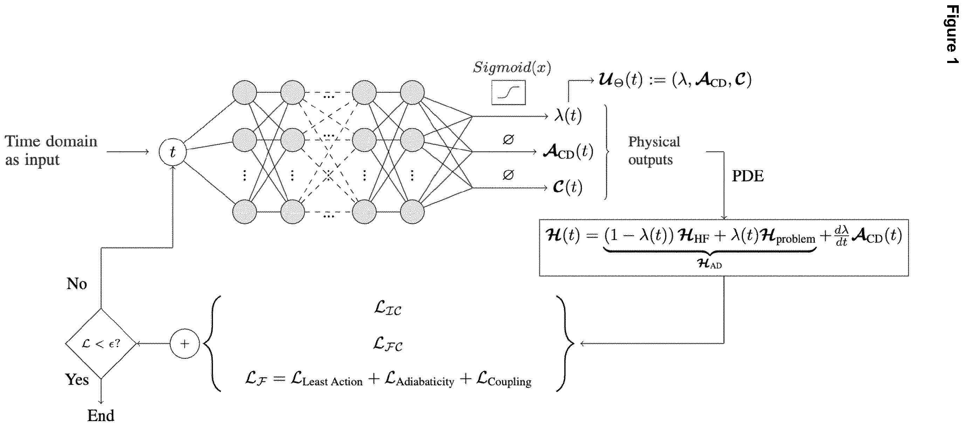

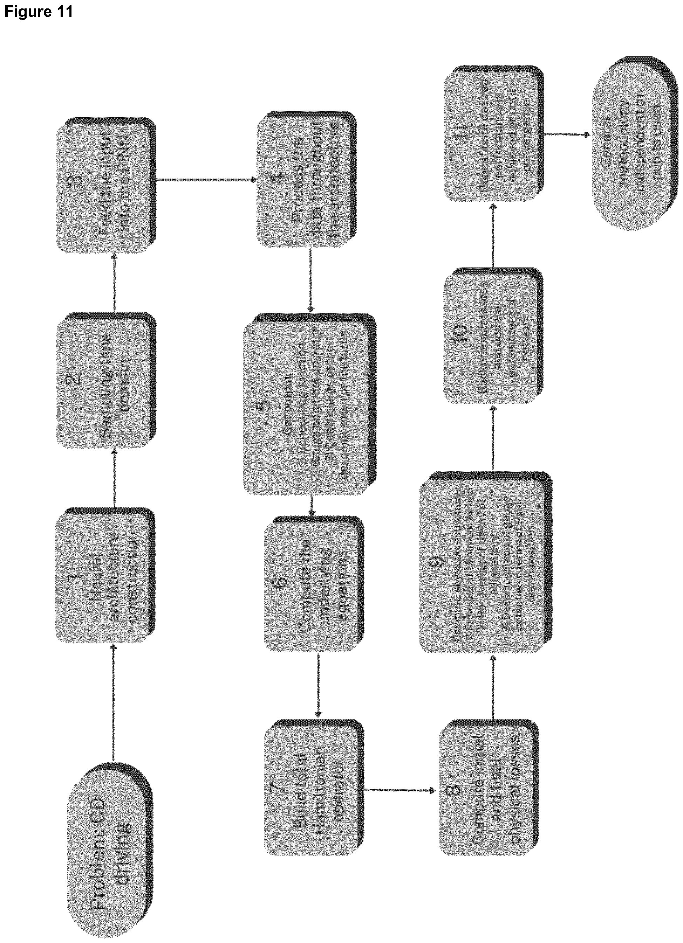

The deep learning method comprises a PINN, a type of neural network that is informed with physics. The steps for the deep learning method as the algorithm for the training, is in a particular embodiment also described as Algorithm 1 below. There, in particular, the following steps are shown: defining the temporal domain to be the input of the network, construction of the neural network, derivation of needed outputs, backpropagation process and update of the neural parameters. Figures 1 and 11 also describe embodiments of the method. Several PINNs may be employed in the method of the invention, e.g., two, three or more.

The parameters (i.e. weights and biases) of the underlying neural network informed with physics (PINN) that is used is trainable and is updated throughout the training process with the purpose of minimizing a loss function. In certain embodiments, this loss function, consists of several terms, including the minimization of the Principle of Least Action, the recovering of the adiabatic limit, and the decomposition of the $A_{CD}(t)$ (counter-diabatic operator) in terms of all the possible combinations of Pauli matrices and identity. The latter also encapsulates the hermiticity of the operator due to a mathematical peculiarity. These terms, together with the conditions at initial and final times, form a total loss function that is minimized thereby updating the trainable parameters of the neural network. This minimization of the cost function allows, once the training process is finished, to obtain the optimal values of the output that properly fit the physical constraints that are demanded.

In certain embodiments of the invention, the the PINN provides optimal counter-diabatic terms.

In certain embodiments, the output of the neural network (PINN) comprises:

- a scheduling function A(t),
- a countediabatic gauge potential operator $A_{CD}(T)$ or matrix components of a gauge potential operator, and/or
- a set C(t) of coefficients of a decomposition of the gauge potential operator.

In particular, the potential gauge operator contains the set of counterdiabatic terms.

Any of these outputs are obtained optimally through a training process that minimizes the physical requirements. lambda(t) and $A_{CD}(T)$ correspond to the scheduling function and to a counter-diabatic operator, respectively.

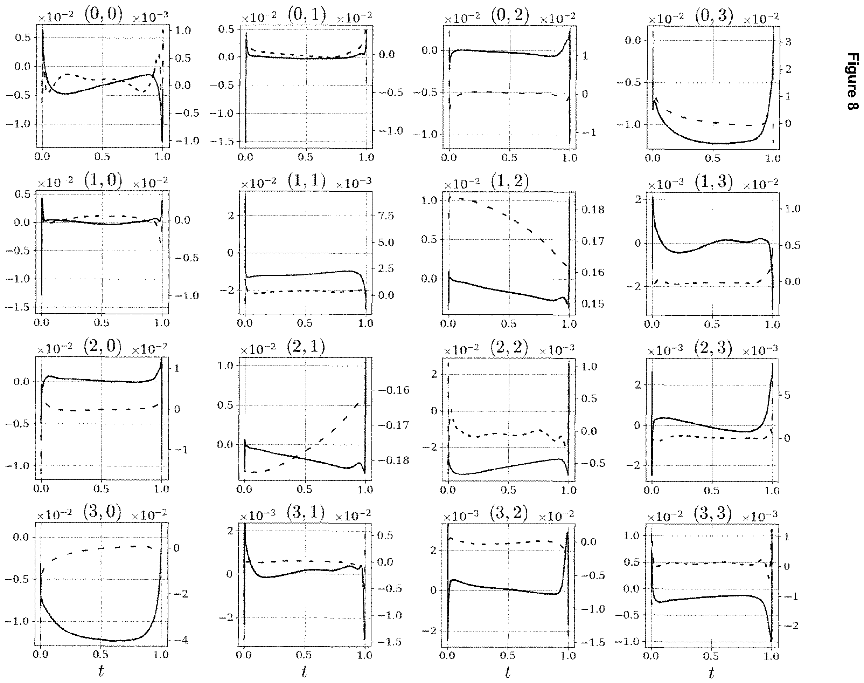

In certain embodiments three outputs are coming from the PINN. One of them consists of all the matrix components that the potential gauge operator has, also referred to as Aco(t). One can obtain all its components along the time. In Figure 8 the 4x4 matrix components for this operator vs. time are shown for an $H_2$ molecule as an example. This operator basically contains the counter-diabatic terms of the evolution.

Equation (26) shown below shows the mathematical definition of the operator $A_{CD}(t)$ in terms of decomposition. The decomposition can be done for any Hermitian operator. The Equation (27) corresponds to the Loss term (cost function) that forces the neural network to adjust the Aco(t) output in such a way that it can be decomposed, thereby giving us the optimal C(t) terms for the decomposition.

In certain embodiments, the method comprises three terms of losses, for example, for least action, for adiabaticity and/or for hermiticity. In some embodiments, the coefficients in Pauli matrices are used for its implementation in quantum computers.

One of the outputs that the PINN provides a scheduling function, also denoted as $\lambda(t)$. This parameter, as well as the other outputs, are defined in terms of the time, being the time (t) the inputs of the network. This lambda(t) receives the name of "scheduling function" since it paces the evolution from the initial time (t = 0) to the final time (t = final time), and has to fulfill some physical constraints. Therefore, once the training process is finished, the trainable parameters of the PINN are such that the outputs are optimal regarding the minimization of the physical constraints, where the lambda(t) (scheduling function) is included, since it is one of the outputs that is to be optimized. This lambda(t) may also be referred to as "temporal parameterization", since it is a function that depends directly on time.

The third output of the PINN is the set of "C(t)" coefficients. The C(t) coefficients are real numbers that are also optimized through the training process, and they serve as the terms of the linear decomposition of the Aco(t) (counter-diabatic operator) in terms of all the possible combinations of the Pauli matrices and identity over the N qubits considered within the quantum system.

C(t) represent the real coefficients that allows to decompose the $A_{CD}(T)$ operator in terms of all the possible combinations of operations that can be done on a certain system of N qubits. These operations describe all the possible combinations of Pauli matrices and identity operators. Therefore, one can use the method to extract ALL the possible combinations of operations, which will scale in quantity and in magnitude when the number of qubits N, increases. In certain embodiments, N is between 2 and 50, in particular between 2 and 25 or between 2 and 6.

In certain embodiments, a basis whose components are all the possible combinations of Pauli matrices (rotations in X, Y, Z) is used together with an identity operator (leaving the qubit unaffected). These elemental matrices are then combined depending on the number of qubits present, scaling as $4^N$ where $N$ is the number of qubits. For example, for 2 qubits one would have 16 possible combinations and thus, 16 elements as maximum in the basis.

However, when scaling in qubits, this number becomes very high and in certain embodiments a subset of the possible operations that on the qubits is chosen, thereby limiting the number of possible elements of the basis (i.e. the rest are forced to be zero). For example, for 2 qubits, one may use:

-   Rotation in X for one qubit and along Y for the other, thus providing $C_{XY}$ and $C_{YX}$ coefficients.

-   Leaving one qubit unaltered and the other is rotated along the Z axis. Thus, $C_{IZ}$ and $C_{ZI}$ coefficients are obtained.

In this case, one would get a subset of 4 elements: $\{C_{XY}, C_{YX}, C_{IZ}, C_{ZI}\}$, instead of having 16.

In certain embodiments of the method, because one can restrict the number of all possible combinations of operations that can be done on the qubits (whose weights are defined by the C(t)), is restricted and therefore, is a predefined subset that comes determined by the specific hardware that is used, or by the specific optimization problem to be solved.

In certain embodiments of the method, solving the optimization problem comprises counterdiabatic (CD) driving wherein the set of CD terms is used to optimize the result to the optimization problem.

In certain embodiments, the method is focused on determining the optimal counter-diabatic (CD) terms of the counter-diabatic driving according to the minimization of a set of physical constraints (loss / cost functions) by a neural network (a deep learning method, in particular a PINN).

The method of the invention allows to extract the

1) counter-diabatic terms vs. time for an arbitrary number of qubits,

2) the scheduling function marking the pace of the temporal evolution, and

3) the weight of the different contributions for the counter-diabatic operator (Aco(t)) once decomposed as a linear combination of the set Pauli matrices and identity.

In certain embodiments, the method comprises determining a total temporal evolution of an energy level of the quantum system, known as the eigenvalues of a total Hamiltonian operator.

The "total Hamiltonian" corresponds to the Equation (22), in particular it represents the magnitude H(t). Basically, it is the physical equation that encapsulates the dynamics of a system of N qubits. It can also be seen in the diagram of the methodology in Figure 1. The operator total Hamiltonian, i.e. H(t), is the addition of a certain adiabatic operator $H_{AD}$ and a part $A_{CD}$, corresponding to the counter-diabatic terms.

Essentially, the counter-diabatic terms are a part of the total Hamiltonian operator, and therefore one needs to construct the latter in order to compute some of the necessary physical constraints.

In certain embodiments of the method, employing the counter-diabatic driving increases a separation between the quantum system's ground state $E_0$, and its first excited level $E_1$.

In certain embodiments of the method, the optimization problem in a chemical system refers to combinatorial optimization problems, in particular those that find the ground state of a given molecule. For example, by solving a maximum independent set (MIS) problem the method can be used to model the selection of active sites in molecular synthesis where interactions between selected sites need to be minimized. For instance, in designing a catalyst, finding an MIS helps identifying a set of sites that are as far apart as possible to avoid unwanted reactions or to enhance the efficiency of the catalyst. In general, quadratic unconstrained binary optimization problems can be solved that can represent an energy minimization process in chemistry.

In certain embodiments of the method, solving the optimization problem comprises counterdiabatic (CD) driving wherein the set of CD terms is used to optimize the result to the optimization problem.

In certain embodiments of the method, at least one partial differential equation characterizes a time-dependent behavior of the chemical system, for example time-dependent energy equations.

In certain embodiments of the method, the updating of the temporal domain with derivated outputs is performed until a maximum number of iterations or a defined convergence is reached. In general, the training process ends when a sufficiently small value of the loss function is reached or when the number of maximum iterations (epochs) is reached. A maximum number of epochs is defined depending on the problem to be solved. In general, 500,000 epochs are defined as the maximum number. By checking the value of the loss function one can determine that the system has successfully converged.

The method of the invention outperforms the methods of the prior art by yielding the optimal values for CD-terms and $\lambda(t)$, without assuming any a priori hypothesis and with scalability for a high number of qubits. Moreover, the invention is applied to many-body systems in certain embodiments.

In a second aspect, the invention refers to a system comprising

at least one processor, and

a physics-informed neural network trainer implemented on the at least one processor and configured to perform operations comprising:

training a physics-informed neural network (PINN) using a plurality of training samples, wherein training the physics-informed neural network comprises:

differentiating at least one partial differential equation characterizing a time-dependent behavior of a chemical system; and

minimizing a loss function specifying an error of the physics-informed neural network with respect to the training samples by assigning a plurality of weights in a residual loss value to account for physical causality in the partial differential equation; and

predicting, using the physics-informed neural network, a conformation of a molecule with minimum energy of the chemical system.

In a third aspect, the invention refers to a data processing apparatus or system comprising means for carrying out the steps of the method as described herein.

In a fourth aspect, the invention refers to a computer program [product] comprising instructions which, when the program is executed by a computer, cause the computer to carry out the steps of the method as described herein.

In a fifth aspect, the invention refers to a computer-readable [storage] medium comprising instructions which, when executed by a computer, cause the computer to carry out the steps of the method described herein.

In a fifth aspect, the invention refers to a non-transitory computer-readable storage medium having stored thereon computer executable instruction which when executed by one or more processors, cause the one or more processors to carry out operations for augmenting a neural network comprising, the operations comprising perform the operations comprising:

connecting an input layer to a pre-input layer;
joining a hidden layer to the input layer; and
linking an output layer to the hidden layer; and connecting a layer for computing physics equations of the output layer.

Other features and advantages of the invention will be apparent upon reading the detailed description and reviewing the accompanying drawings of the figures.

## Detailed description of the Invention

Various embodiments of the invention are further described in more detail with reference to the accompanying drawings and the examples. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

Hybrid Classical-Quantum Algorithms

Hybrid classical-quantum algorithms leverage Noisy Intermediate-Scale Quantum (NISQ) devices while offloading a portion of their computational workload onto classical devices, offering considerable potential for practical applications in the field of quantum computing. A prominent example worth highlighting is the Variational Quantum Eigensolver (VQE). The purpose of VQE is to determine the lowest energy quantum state through hybrid optimization, utilizing a designated Hamiltonian operator in conjunction with variational quantum circuits. The realm of quantum machine learning also falls under the purview of these algorithms, seeking to adapt classical algorithms to their quantum counterparts to enhance and expedite computations by capitalizing on the principles of quantum superposition, entanglement, and interference. Within this domain, one can identify supervised classification algorithms like binary classification and those based on Grover's search algorithm. Notably, Grover's algorithm has demonstrated quadratic acceleration in solving problems such as k-medians or k-nearest neighbors. On the other hand, an alternative method is the Quantum Approximate Optimization Algorithm (QAOA). This approach presents a valuable alternative for tackling combinatorial optimization problems using shallow quantum circuits through classical optimization of the associated parameters. In recent literature, substantial endeavors have been dedicated to employing these methodologies to solve the ground-state challenges of physical systems, reflecting the ongoing efforts to enhance and adapt these techniques for broader applications in quantum optimization.

Quantum system

A quantum system refers to a collection of quantum mechanical entities, such as electrons, photons, atoms, or ions, that can be manipulated and controlled to represent and process information in quantum states. These systems are characterized by properties like superposition, where they can exist in multiple states simultaneously, and entanglement, where the state of one entity is inherently linked to the state of another. This allows for the execution of complex computational tasks with efficiency and speed unattainable by classical computing systems. These systems can be realized using a quantum computer using qubits (two-level systems) the basic building blocks.

Adiabatic Quantum Computing

Adiabatic Quantum Computing (AQC) algorithms are used to solve combinatorial and optimization problems and they are expected to outperform classical computers in the current Noisy Intermediate-Scale Quantum (NISQ) era.
These AQO (adiabatic quantum optimization) methodologies have direct practical impact in branches such as physics and chemistry. These algorithms encode the ground state of a Hamiltonian operator and access the energy of the mentioned state through a second Hamiltonian using adiabatic evolution of its eigenvalues, facilitated by the ease of preparing the ground state under experimental conditions. Leveraging the adiabaticity theorem, it becomes feasible to ensure that the quantum system remains in its instantaneous state of lowest energy, provided the evolution of the initial Hamiltonian is carried out in a sufficiently slow and gradual manner and within a sufficiently extended period of time. Nevertheless, implementing slow adiabatic transitions at the experimental level is typically not feasible, necessitating the development of methodologies that accelerate these processes. In pursuit of this objective, various approaches seem possible based on Shortcuts to Adiabaticity (STA). One approach is CD driving protocols, a technique specifically designed to expedite the adiabatic evolution process from an initial Hamiltonian to a final Hamiltonian. This is achieved by incorporating non-adiabatic terms to the original adiabatic Hamiltonian in the following Eq.

$$H(t) := H_{AD}(t) + H_{CD}(t) \qquad (1)$$

wherein $H_{AD}(t)$ is the adiabatic Hamiltonian and $H_{CD}(t)$ is the CD (non-adiabatic) Hamiltonian.
The main challenge of CD protocols lies in the accurate determination of the operator encompassing the non-adiabatic terms of the process. In general, the computation and acquisition of this operator are exceedingly intricate tasks, particularly when dealing with many-body quantum systems. As a customary approach in related literature, a time-dependent external parameterization, denoted as $\lambda(t)$, is introduced to which the operators are dependent. Efforts have been directed towards a method for the approximate determination of this operator, leading to significant progress, such as the development of the Nested Commutator (NC) method. This advancement has led to recent contributions, exemplified by. Within this framework, the computation of these terms is simplified into a series of commutators involving $H_{AD}(t)$ and its derivatives concerning the mentioned external parameterization $\lambda(t)$. As a result, the non-adiabatic terms of these protocols are obtained approximately through an expansion in orders, where the complexity of obtaining them rises accordingly with the number of particles in the system and the order considered in the expansion. Nevertheless, these methodologies may exhibit problem-dependent characteristics, as their escalating complexity in non-trivial physical scenarios might necessitate the adoption of alternative perspectives to approach the issue at hand.

Deep Learning in Physical Sciences

In a distinct domain, within the rapid progression of the computer science field, the realm of Deep Learning (DL) has achieved prominence as a highly potent instrument for constructing diverse models, owing to its direct applicability in domains such as image processing, natural language generation and processing, time series prediction and classification, among a plethora of other possibilities. Present-day technologies encompass Recurrent Neural Networks (RNNs), Long Short-Term Memory architectures (LSTMs), the known transformers, sparse and submanifolds convolutional networks utilized for images with limited information load, among other advanced techniques. The Physics-Informed Neural Networks (PINNs) method is a DL application which aims to address specific problems by employing neural networks as powerful universal approximators for systems of Partial Differential Equations (PDEs) that govern the physics describing the evolution. Due to their remarkable potential as numerical solvers, PINNs have garnered considerable attention and established themselves as a viable alternative to conventional numerical solving algorithms. Extensive efforts have been undertaken in diverse branches of physics to apply this method and its adaptations. These fields encompass classical hydrodynamics, relativistic hydrodynamics, electrodynamics, chemistry, and many others. PINNs demonstrate their utility wherever differential equations are employed to describe the underlying physics of a given scenario. Their ability to unravel complex physical phenomena and offer numerical solutions has positioned them as promising tools for tackling intricate problems across various scientific domains. Consequently, the motivation to employ this method for addressing the challenge of CD protocols in quantum systems arises organically. The investigation of potential applications of PINNS in quantum systems and circuits becomes a natural course of study.

Physics-informed Neural Networks (PINNs)

The fundamental approach employed in PINNs methodologies involves leveraging neural networks as powerful tools for approximating functions and solving physical problems by fitting sets of differential equations, known as partial differential equations (PDEs). PINNs derive their name from the fact that they incorporate physical knowledge through the incorporation of inductive biases. These biases are manifested in various aspects of the method, including the design of the underlying neural network architecture, the formulation of appropriate cost functions (losses), and other characteristics that aim to ensure or enhance the convergence of the neural model. The underlying algorithm of these networks leverages the automated differentiation capabilities found in contemporary frameworks to construct differential equations based on the output variables obtained from the network. These variables are essential for computing the specific problem at hand. By performing calculations, a minimization process is subsequently employed, guided by a designated loss function, to update the trainable parameters of the architecture. Consequently, this adjustment aligns the network with the requirements of the physical framework.

The invention refers to using Deep-Learning, for example PINNs, in connection with Counter-Diabatic protocols for the determination of the counter-diabatic (CD) terms, $A_{CD}$. in CD Driving optimization problems.

In an aspect, the invention refers to a method for solving an optimization problem in analog quantum computation, comprising:

(a) employing a deep learning method to address a Counter-Diabatic driving problems in a quantum system; and

(b) obtaining a generalized, problem-independent solution for said Counter-Diabatic driving.

The optimization problem may be CD driving, which is an optimization problem in the sense that specific CD terms are to be found that optimize the result of a given problem.

In certain embodiments of the method of the invention, the deep learning method a Physics-Informed Neural Network (PINN). In certain embodiments, the method of the invention further comprises:

- determining optimal counter-diabatic terms; and/or

- establishing an optimal temporal parametrization.

In certain embodiments, the method of the invention further comprises:

- deriving a theoretical Pauli matrix decomposition.

In certain embodiments, the method of the invention further comprises:

- determining the total temporal evolution of the energy levels of a system, known as the eigenvalues of the total Hamiltonian operator, and/or

- employing the Counter-Diabatic approach to yield an increased separation between a quantum system's ground state, represented as $E_0$, and its first excited level, represented as, $E_1$, a distinction advantageous for experimental undertakings.

In certain embodiments, the method of the invention is applicable to a system of N qubits with N defined as number of qubits.

In certain embodiments of the method, despite potential exponential training time increase with the addition of qubits, experimental constraints (such as limited experimental combination of Pauli gates, qubit connectivity, etc.) allow for effective training of at least one PINN for a large number of qubits. A "large number of qubits" is reached when a given classical computers cannot handle the memory usage or the time taken to train a PINN is more than what it takes to solve the given problem classically. A "large number of qubits" does not refer to a fixed quantity as it can vary between different hardware setups such as a classical supercomputer or a personal laptop.

In certain embodiments, the method is configured to be suitable for experimental contexts involving a large number of qubits. In experimental contexts the hardware limitations can make that the number of possible combinations of gates is much less than in an ideal case. Therefore, having a large number of qubits, such as 30 qubits or more, is achievable with the invention.

In certain embodiments of the method, the optimization problem refers to CD driving wherein specific CD terms are used to optimize the result to a given problem.

In another aspect, the invention refers to a method for solving an optimization problem in analog quantum computation as described herein.

The invention also provides an optimal scheduling function, $\lambda$, to drive the adiabatic process as well as the optimal set of coefficients (**C**) of the Pauli matrix decomposition of the adiabatic gauge potential. This is a significant advantage as it provides a direct practical implementation within quantum circuits for different platforms.

In certain embodiments, the method of the invention (also referred to as QuPINNs) comprises the following steps:

- The initial step involves identifying the independent variable(s) that will influence the outputs. In a particular case, only a temporal variable is used, denoted as t, defined within the interval $[t_{min}, t_{max}]$ commonly specified as [0,1]. Consequently, an appropriate sampling method is selected. Various methods are available, including uniform sampling with equidistant points, random sampling, Latin Hypercube sampling and Sobol sampling. The choice of method is somewhat arbitrary, with greater impact when considering fewer time points, as its significance diminishes as the sample size approaches infinity. In certain embodiments, the Sobol sampling is preferred.

- After generating the time domain, it serves as the input to the network, which will be constructed as a sequence of fully connected K dense layers, encompassing both the input and output layers. The number of layers and the number of neurons in each layer (N) are hyperparameters that will be predetermined prior to training. While these parameters can be adjusted, in certain embodiments, a relatively conventional configuration, such as 6 or 7 layers with 30 to 40 neurons each, will suffice for characterizing the counter-diabatic driving problem. Nevertheless, the complexity of individual problems may necessitate varying numbers of layers and/or neurons.

- With the establishment of the input domain and the construction of the network, one is now capable of extracting the output and interpreting it as the tensor of physical variables denoted by $U_{\Theta}(t) = (\lambda, A_{CD}, C)$. Where $\lambda$ is a real scalar function representing the scheduling function, $A_{CD}$ is a complex square matrix with a number of rows equal to two to the power of the number of qubits of the system; representing the CD terms, and finally, **C** is a vector of real coefficients (length equal to the number of possible combinations of Pauli gates; in an ideal case equal to four to the power of number of qubits) that represents the coefficients of the Pauli decomposition of $A_{CD}$.

- Subsequently, the derivative of the scheduling function can be straightforwardly computed using the neural-network's automatic differentiation. By doing this, now the Hamiltonian operator $H(t)$ can be constructed using the following expression,

$$H(t) = H_{AD}(t) + \left(\frac{d\lambda}{dt}\right) * A_{CD}(t), \tag{2}$$

where

$$H_{AD}(t) := \left(1 - \lambda(t)\right) * H_{HF} + \lambda(t) * H_p \tag{3}$$

where $H_{HF}$ is the initial Hamiltonian chosen in such a way that its ground state can be easily prepared and $H_p$ is the final Hamiltonian corresponding to the problem Hamiltonian encoding the solution to the problem.

- Subsequently, constructing the initial and final loss functions using, for example, Mean Squared Error (MSE) as $L_{IC}$ and $L_{FC}$, respectively.

- Deriving the comprehensive set of physical loss functions, $L$, associated with the differential equations that the system must respect. Considering the Principle of Least Action, adherence to adiabatic conditions, the decomposition in terms of Pauli tensor products and the hermiticity of the physical operators as a direct consequence of the latter. All the losses mentioned before are encapsulated in $L_F$. Thus, the total loss function is defined as $L = L_IC + L_FC + L_F$. Each loss function may have a weight in certain embodiments that can be modified to make the neural network adhere more precisely to each loss function.

- Updating the set of neural network variables by backpropagation using a predefined optimizer. This way the neural network will try to minimize the total loss function i.e. better adherence to physical constraints.

- The last four steps are repeated until convergence is met i.e. the total loss is below a certain threshold; or a maximum number of iterations is reached.

Once the PINN is trained, the output provides quantitative results, the optimal set of scheduling function, the adiabatic gauge potential (CD terms) and its decomposition in terms of Pauli tensor products with direct experimental implementation.

In another aspect, the invention refers to a data processing apparatus or system comprising means for carrying out the steps of the method described herein.

In another aspect, the invention refers to a computer program [product] comprising instructions which, when the program is executed by a computer, cause the computer to carry out [the steps of] the method described herein.

In another aspect, the invention refers to a computer-readable [storage] medium comprising instructions which, when executed by a computer, cause the computer to carry out the steps of the method described herein.

Taking a broad perspective while maintaining generality, one can denote by $U := U(t, x)$ a collection of physical variables that serve as the output of the neural network. These variables, along with their derivatives, are the components of a system of PDEs defined within a domain of interest $\Omega$ over a specific time interval $[0, T]$. Consequently, it is possible to write the following definition:

$$F\left(t, x; \frac{\partial U}{\partial t}, \frac{\partial^2 U}{\partial t^2}, \dots; \frac{\partial U}{\partial x_1}, \dots, \frac{\partial U}{\partial x_D}; \frac{\partial^2 U}{\partial x_1 \partial x_1}, \dots, \frac{\partial^2 U}{\partial x_1 \partial x_D}, \dots\right) = 0, x = (x_1, \dots, x_D) \in \Omega, t \in [0, T],$$

(4)

where $D$ corresponds to the spatial dimension of the problem and $\Omega \subset R^D$. The operator F defined in equation can be conceptualized as the comprehensive collection of physical constraints inherent to the system, which must be fulfilled in order to satisfy the underlying partial differential equations (PDEs). It is worth noting that, in addition to these constraints, supplementary limitations can be established, such as the initial conditions that dictate the evolution of the system as described in the following equation:

$$IC(t, x) = 0, (t, x) \in \{0\} \times \Omega, \qquad (5)$$

or potential boundary conditions that may influence the behavior of the system at the spatial boundaries of the domain, as denoted in in the following equation:

$$B(t, x) = 0, (t, x) \in \times \partial \Omega. \qquad (6)$$

In addition to the aforementioned conditions, other factors can be taken into consideration, such as imposing additional constraints on the final time (final conditions), or at specific points of significant physical significance within the spatiotemporal framework. Furthermore, if there are actual experimental measurements available for a subset of the domain, they can also be incorporated. Consequently, each of these physical conditions represents a segment of a priori knowledge regarding the physical scenario that can be integrated into the cost function as separate terms (referred to as "soft enforcement"), as denoted with $L_i$ in equation:

$$L = \omega_F L_F + \sum_i \omega_i L_i, \qquad (7)$$

where $L_F$ corresponds to the metric pertaining to the underlying system of PDEs, while the collection $(\omega_F, \omega_i, \dots)$ represents the weights assigned to each term within the mixture. The neural architecture employed in this method yields a set of essential physical variables, denoted as $U(t, x; \Theta) := U_\Theta(t, x)$, where $\Theta$ encompasses all the trainable parameters of the network that are updated during the training process. Consequently, the output aims to closely align with the corresponding real-world values, $U_\Theta(t, x) \approx U(t, x)$.

The constraints expressed in Eq. (2) and (3) can be transformed into cost functions by employing a suitable difference measurement metric, such as Mean Squared Error (MSE) or similar approaches. The determination of these cost functions together with $L_F$ can be outlined as follows

$$L_{IC} := \frac{1}{N_{IC}} \sum\nolimits_{\{0\} \times \Omega} |U_\Theta(0, x) - U(0, x)|^2, \tag{8}$$

$$L_B := \frac{1}{N_B} \sum\nolimits_{(0,T) \times \partial\Omega} |U_\Theta(t, x \in \partial\Omega) - U(t, x \in \partial\Omega)|^2, \tag{9}$$

$$L_F := \frac{1}{N_F} \sum\nolimits_{(0,T) \times \Omega} \sum\nolimits_k |R_k(t, x; \theta)|^2 . \tag{10}$$

Here, the set $(N_{IC}, N_B, N_F)$ represents the number of points in the sample for each respective domain considered. Additionally, $R_k$ denotes the fulfillment of specific physical constraints imposed at the level of the PDE. Through the utilization of the fundamental method employed in PINN models, it becomes feasible to smoothly enforce the imposed constraints by adjusting the PDEs associated with the given problem. Nonetheless, alternative approaches, such as the "hard enforcement" method, propose compelling the neural network to enforce predetermined constraints from the onset of training by modifying the output of the network. This technique necessitates incorporating several constraints, but it entails establishing a specific dependence on the problem at hand. Other researchers achieve a certain level of independence concerning the set of weights ($\omega_R$, $\omega_i$...) in Eq. (5) through the application of the Lagrange augmented method. This technique involves updating multipliers with corresponding names during training in accordance with the degree of violation for each respective condition.

The invention relates to the application of PINNs to solve the CD protocol problem of finding the CD terms. It is a generalized problem-independent method, where the problem information is encoded in the initial and final Hamiltonian. The following steps may serve to extract the CD terms:

- Specifying the training domain using a Sobol sequence to generate the temporal interval that will be used as input for our neural network.
- Constructing the neural network as a densely connected network of K layers with N neurons per layer.
- Establishing the output of the neural network as a set of variables comprising the scheduling function, the operator controlling the CD terms and the coefficients of its associated Pauli decomposition.
- By employing the principles of automatic differentiation, the derivative of the scheduling function is computed and the complete Hamiltonian operator for the given problem is constructed.
- All the physical constraints of the problem are formulated as neural network loss functions. By doing that, the neural network will optimize its parameters in order to minimize the loss functions. Therefore, the neural network will learn what CD terms are needed for accelerating the adiabatic quantum computation.
- The PINN is trained until a desired convergence is achieved or a maximum number of iterations is reached.

Being a problem-independent method means that the previous steps are followed for every problem without changing the structure of the PINN.

To encode the information of a problem inside the PINN, such as a physics or chemistry problem, the problem to be solved is formulated in the language of adiabatic quantum optimization with an initial Hamiltonian chosen in such a way that its ground state can be easily prepared. The final Hamiltonian corresponds to the problem Hamiltonian encoding the solution to the problem.

To test the method of the invention, the $H_2$ molecule problem was used by the inventors within the STO-3G basis, considering different bond distances between the particles and utilizing a 2-qubit representation.

**Figures**

The figures show:

**Figure 1:** In certain embodiments, the method follows a general procedure where time, represented by the variable t, is the only independent physical variable considered, incorporated into a network as a tensor. The output of the method, in certain embodiments, comprises three elements: the scalar variable of the scheduling function denoted as

$\lambda(t)$, the operator representing the counter-diabatic terms of the process, expressed as $A_{CD}(t)$, with each of its components treated as an independent output, and the coefficients $C(t)$ denote the general decomposition coefficients of the operator $A_{CD}$ expressed as a linear combination of tensors resulting from all possible Kronecker products formed between the set of operators comprising the identity matrix and the Pauli operators. Subsequently, the computations required to construct the total Hamiltonian, denoted as $H(t)$, are carried out. Various physical constraints may be imposed during these computations, including inductive biases. These constraints adhere, in particular, to the principle of minimum action, satisfy the initial and final conditions, and ensure the hermiticity of the physical operators among other specifications. At each step of the training process, the total loss is calculated by aggregating the contributions from all imposed conditions, denoted as $L$. This calculation continues until, for example, a specific training period is reached or until a predetermined error threshold is achieved.

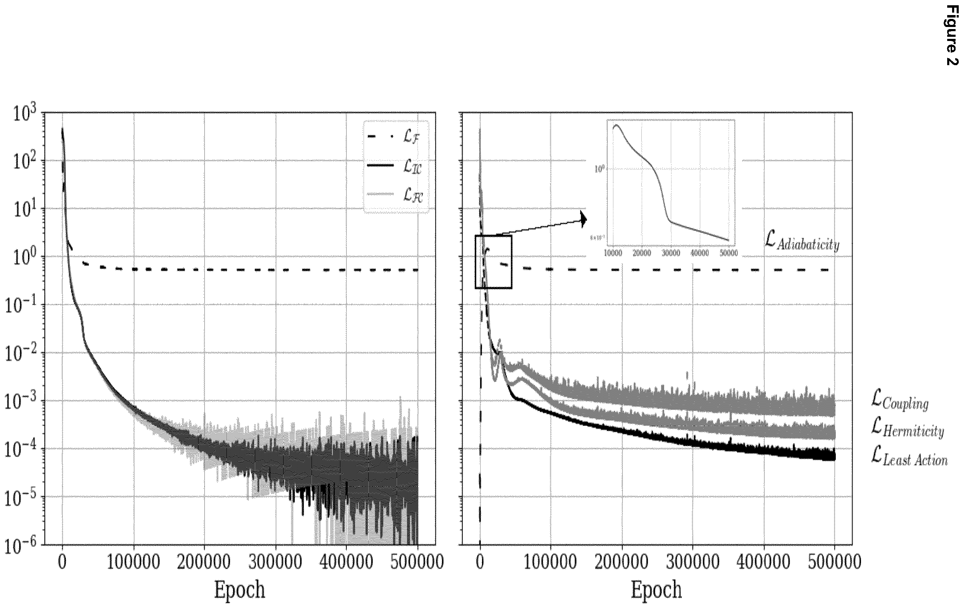

**Figure 2:** Analysis of the evolution of the loss function during the training process. On the left the dynamic changes of the components contributing to the total loss, $L$, as defined in Equation (29) is illustrated. On the right side of the graph, each individual constituent of the loss, $L_F$, is presented, corresponding to the different physical aspects under consideration. It is important to note that the loss term $L_{Hermiticity}$ is included in the plot, although it remains undefined and unused throughout the training. This term quantifies the discrepancy between $A_{CD}$ and its adjoint operator but is solely provided for visualization purposes, tracking its reduction relative to $L_{Coupling}$ due to their mathematical equivalence.

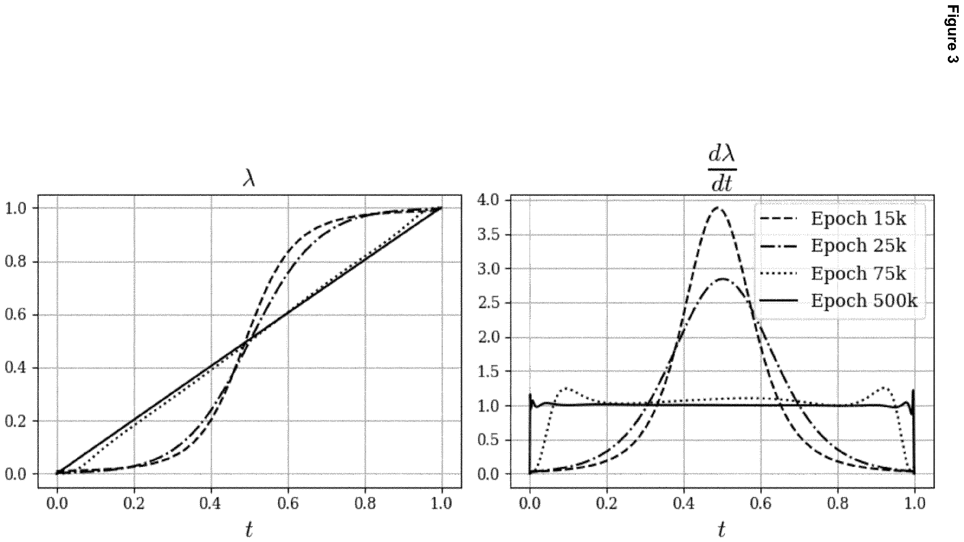

**Figure 3:** Analysis of the scheduling function $\lambda$ and its temporal derivative for distinct iterations (epochs) of the training process. Observations reveal that during the initial stages of neural optimization, $\lambda$ exhibits characteristics resembling a sigmoidal function. However, as the training advances, it converges towards a linear behavior $\left(\frac{d\lambda}{dt} \approx 1\right)$.

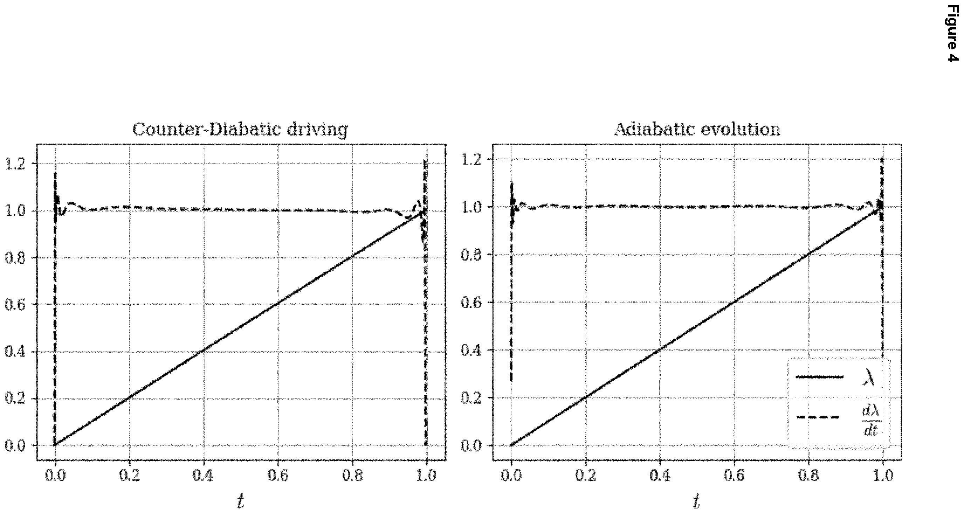

**Figure 4:** Evolution over time of the Scheduling function $\lambda(t)$ (in solid black) along with its derivative (in dashed black) predicted by the method of the invention for the $H_2$ molecule in the STO-G3 basis set using the CD protocol on the left. On the right, the same is depicted for a fully adiabatic evolution according to expression.

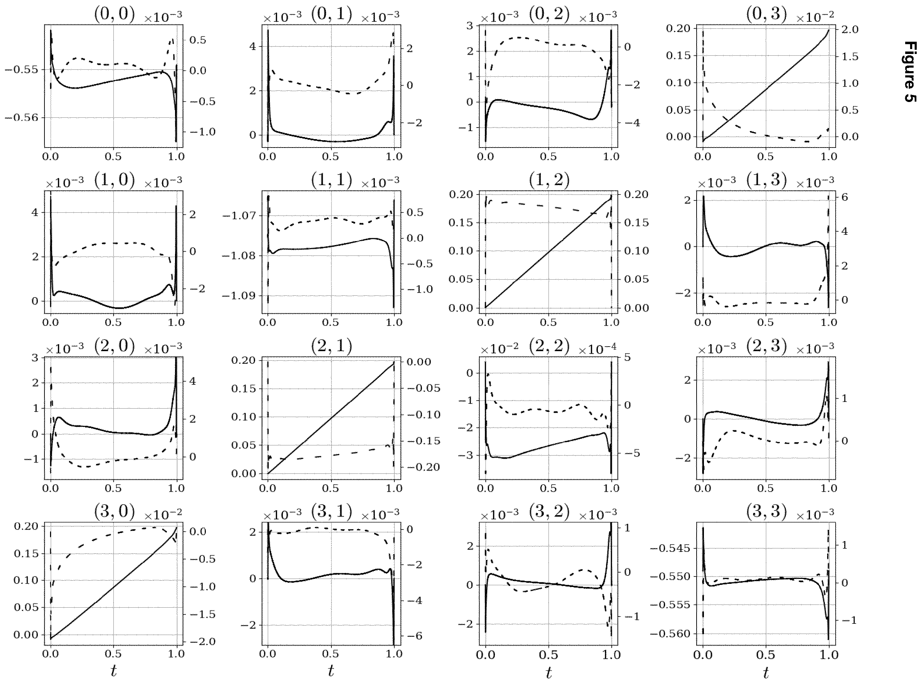

**Figure 5:** The evolution of the real and imaginary components of the Hamiltonian operator $H(t)$ for the $H_2$ molecule is examined using a bond distance of $d = 1.0$Å. Black and gray have been used for real and imaginary parts, respectively, using dashed lines for the latter and a different scale for each one. The findings reveal substantial fluctuations in the values across various time scales. Notably, the natural symmetry and antisymmetry for the real and imaginary components, respectively, arise due to the hermiticity of the operator.

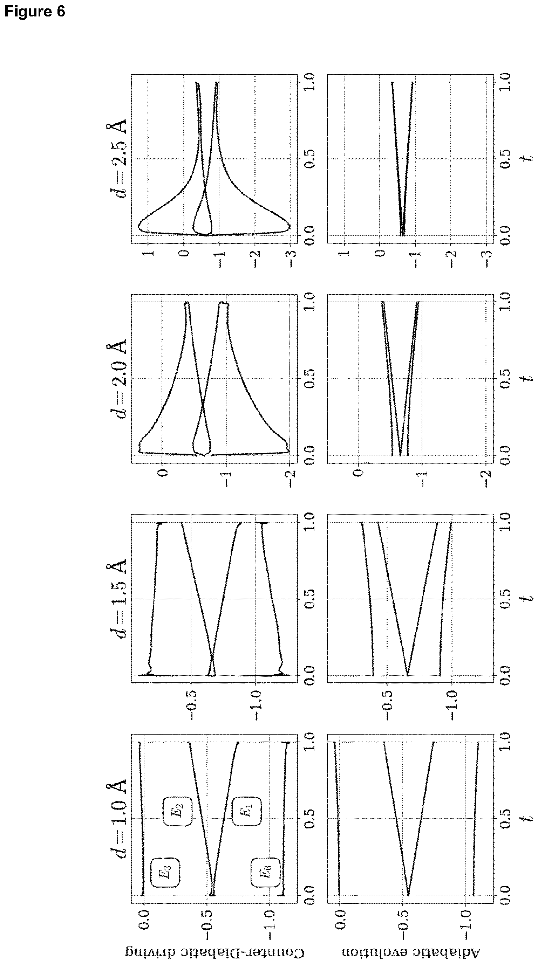

**Figure 6:** Temporal evolution of the real component of the instantaneous energy levels, namely the eigenvalues $E_n(t)$, describing the molecule $H_2$ within a system of 2 qubits utilizing the STO-G3 basis. These computations are conducted for diverse values of the interparticle bond distance, $d$. A comparative analysis of the energy levels is presented, showing the results obtained from the CD protocol in the top row, juxtaposed against the levels obtained from the same method but with a fully adiabatic transition in the bottom row. It is noteworthy that the energy levels demonstrate a tendency to exhibit greater separation under the CD protocol, a phenomenon that becomes particularly pronounced at $d = 2.0$Å and $d = 2.5$Å.

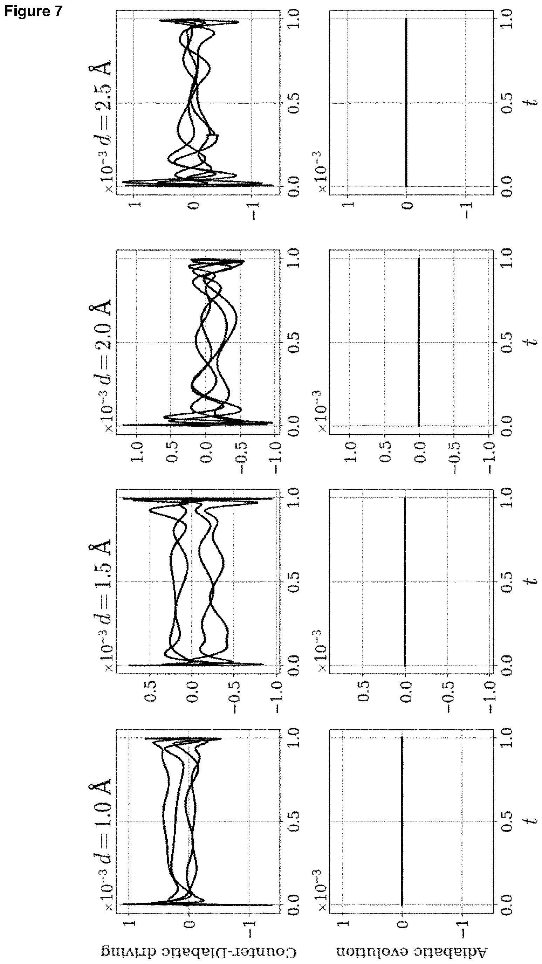

**Figure 7:** Time-dependent variation of the imaginary component of the eigenvalues $E_n(t)$ investigated for the molecular system $H_2$, represented by a 2-qubit configuration in the STO-G3 basis. The computational analysis encompasses two scenarios: one employing the CD protocol in the top row, and the other considering a purely adiabatic transition in the bottom row. In the former case, the imaginary components exhibit magnitudes on the order of $10^{-3}$, whereas in the latter case, these are precisely zero, as dictated by the definition of the underlying PDE.

**Figure 8:** Time evolution of the real and imaginary components of the gauge potential $A_{CD}(t)$ for the $H_2$ molecule using the STO-G3 basis and a bond distance of $d = 1.0$Å, represented respectively in solid and dashed black using two different scales. It is observed that the values exhibit variations across different orders of magnitude. Notably, the natural symmetry and antisymmetry arises naturally in these components over time due to the hermeticity of the operator.

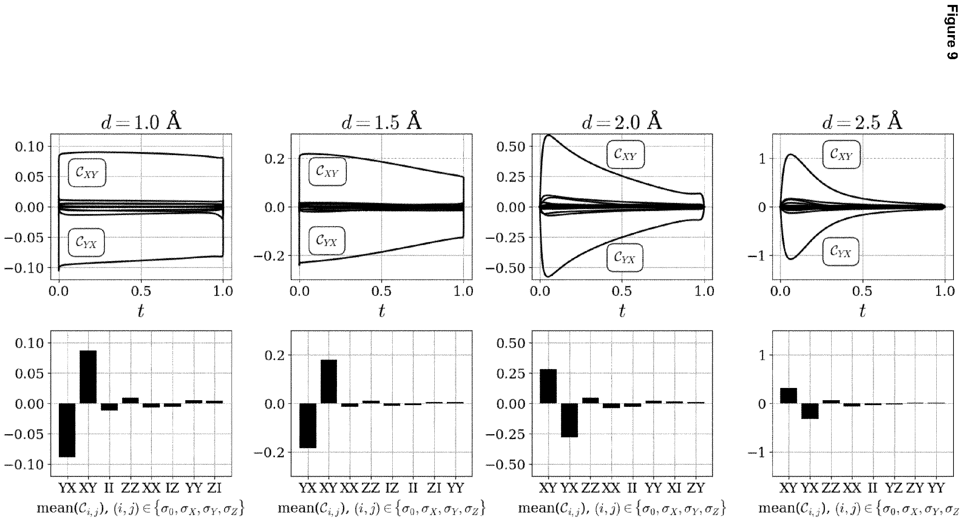

**Figure 9:** The upper row shows the temporal evolutions of the coefficients $C(t)$ resulting from the decomposition of the operator $A_{CD}(t)$ applied to the $H_2$ molecule utilizing a 2-qubit configuration in the STO-G3 basis. In the lower row, a bar chart illustrates the average values of each coefficient, arranged in descending order of magnitude. It is evident that both the coefficient $C_{XY}$ and its symmetric counterpart $C_{XY}$ exert the most substantial influence throughout the entire process, followed by $C_{II}$, $C_{ZZ}$ and $C_{XX}$.

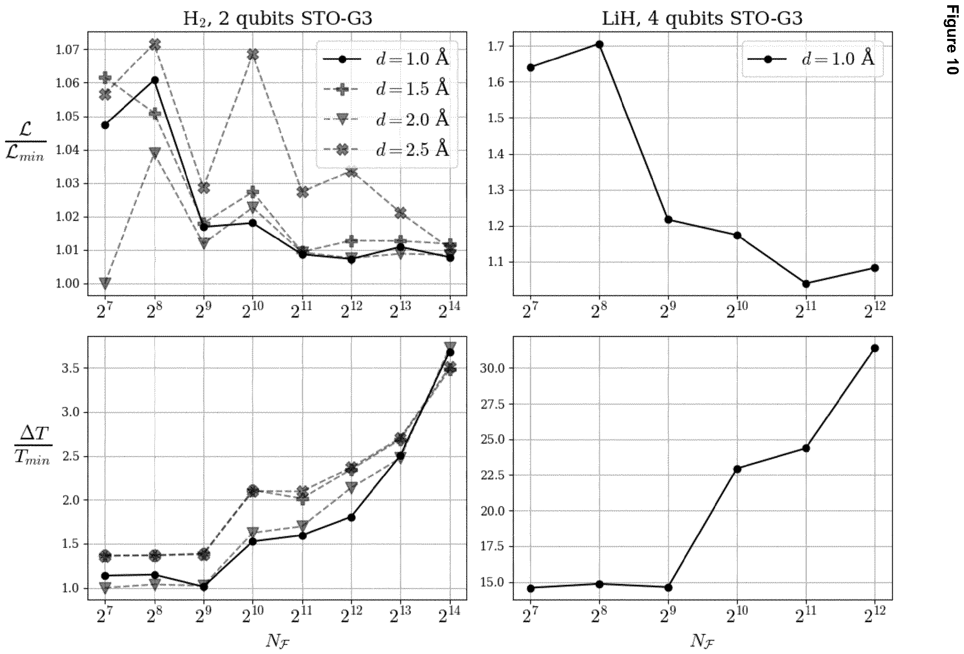

**Figure 10:** Graphical investigation of the scalability of an embodiment of the method of the invention for the $H_2$ molecule in the STO-G3 basis. Various bond distances of the hydrogen atoms are considered, represented by distinct symbols as indicated in the legend to the right. The left-hand side of the graph illustrates the total physical loss $L$ after completing the training process, plotted against the number of points $N_F$ considered within the domain $t \in (t_{min}, t_{max})$. The right-hand side of the graph shows the time required to complete the entire training process, normalized to the minimum time. These experiments were conducted using an NVIDIA A16 GPU.

**Figure 11:** Flowchart with the steps of one embodiment of the method of the invention.

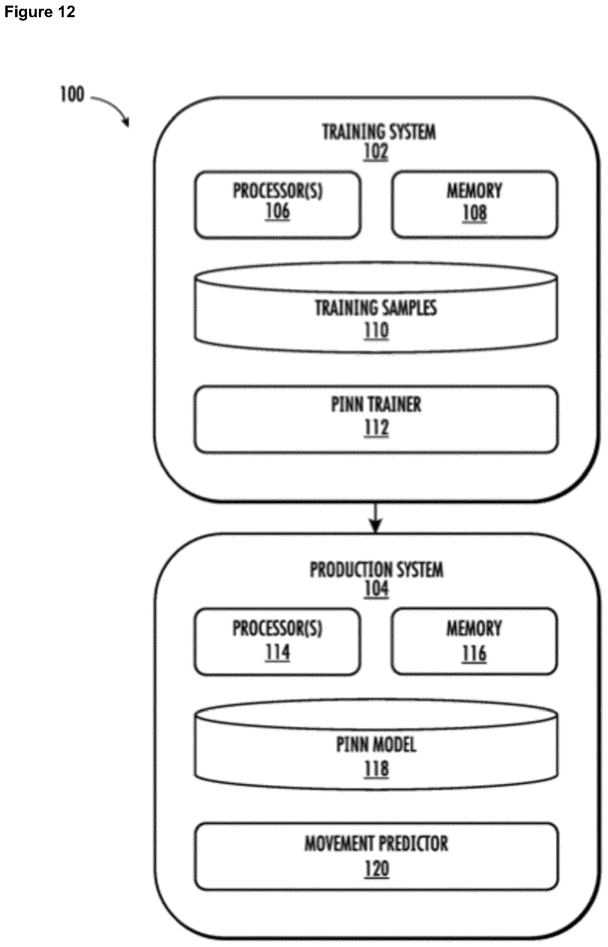

**Figure 12:** In general, PINNs can be used in any application where partial differential equations (PDEs) are used to model physical phenomena, and where there is a need for accurate and efficient simulation or prediction. The methods and system described in this document can be embodied in one or more software modules to be incorporated into numerous PINN models (e.g. a software library) for applications such as optimization.

Figure 12A is a diagram of an example system 100 for training at least one PINN using training samples. The system 100 includes two computer systems, a training system 102 and a production system 104; however, in general, a single computer system or multiple additional computer systems could perform the functions of the two computer systems 102 and 104.

The training system 102 includes one or more processors 106 and memory 108 storing instructions for the processors 106. The training system 102 stores training samples 110 and a PINN trainer 112 configured to train a PINN using the training samples 110. The production system 104 includes one or more processors 114 and memory storing instructions for the processors 114. The production system 104 stores a PINN model 118 that is output from the PINN trainer 112. The production system 104 includes a movement predictor 120 configured for predicting, using the PINN model 118, movement of at least one component of a chemical system.

The training samples 110 can include, for example, a combination of labeled and unlabeled training samples. The labeled samples include input-5 output pairs that are used to train the neural network to learn the relationship between the input and output variables. These labeled samples may be obtained from experimental measurements or simulations.

In addition to the labeled samples, the training samples 110 can include unlabeled samples that encode prior knowledge about the underlying physics. These samples can include, for example, spatial or temporal patterns that are characteristic of the chemical system being modeled.

The unlabeled samples can be used to enforce physical constraints on the learned model, and may be incorporated into the training process in several ways. For example, they can be used to regularize the neural network during training, or to generate synthetic training data to augment the labeled samples.

The PINN trainer 112 can use any appropriate algorithm for training the PINN model 118. For example, the PINN trainer 112 can perform one or more of the following steps in training the PINN model 118 to predict movement of at least one physical component of a chemical system:

1. Data collection and preprocessing: First, data is collected from the chemical system, which may include measurements of position. The data is preprocessed and cleaned, and any missing values are imputed.

2. Model formulation: Next, a PINN is formulated to predict the position and velocity of the chemical component as a function of time. The input variables to the model may include time, position, velocity, and other relevant variables. The output variables are the predicted position and velocity of the chemical component.

3. Training and validation: The PINN is trained on the training samples 110. The unlabeled samples may include physical constraints such as the equations of motion that govern the movement of the chemical component or its particles. The model is trained using an optimization algorithm, such as stochastic gradient descent, to minimize a loss function, which measures the error between the predicted and true output values. The model is validated on a separate dataset to ensure that it is able to generalize to new, unseen data.

The movement predictor 120 can then use the PINN model 118 to predict movement of a physical component of the chemical system. For example, once the PINN model 118 is trained, it can be used to predict the position and velocity of a chemical component at any time. The input variables are fed into the model 118, and the output variables are predicted using the trained neural network. The predicted values can be compared with actual measurements to assess the accuracy of the model 118. The model 118 can be refined and improved by tuning hyperparameters, such as the number of layers or nodes in the neural network, or by adjusting the regularization strength or learning rate. The model 118 can also be updated with new data as it becomes available to improve the accuracy of the predictions.

In some examples, the PINN trainer 112 is configured for training the PINN model 118 by differentiating at least one partial differential equation characterizing a time-dependent behavior of a chemical system; and minimizing a loss function.

**Examples**

To test the method of the invention, the $H_2$ molecule problem was used by the inventors within the STO-3G basis, considering different bond distances between the particles and utilizing a 2-qubit representation.

Quantum circuit design for the $H_2$ ground state problem

The main numerical application will be to find the ground state of the $H_2$ molecule in the STO-3G basis assuming different bond distances where, in particular this STO-3G basis corresponds to a minimal set that uses three Gaussian functions to approximate the atomic orbitals. This can be described with the 2-qubit Full Configuration Interaction (FCI) Hamiltonian in the following Eq.

$$H_{FCI} = c_0 I^{(1)} \otimes I^{(2)} + c_1 I^{(1)} \otimes \sigma_Z^{(1)} + c_2 \sigma_Z^{(1)} \otimes I^{(2)} + c_3 \sigma_Z^{(1)} \otimes \sigma_Z^{(1)} + c_4 \sigma_X^{(1)} \otimes \sigma_X^{(1)} + c_5 I^{(1)} \otimes I^{(2)}, (11)$$

where the value of the coefficients varies with the bond distances.

This corresponds to the problem Hamiltonian in Eq. (9). In this context, the numeric superscripts enclosed in parentheses mean that the written operator pertain to the specific qubit under consideration thereby resulting in distinct matrices associated with each one. The symbol $\otimes$ denotes the Kronecker product. Furthermore, the first and last coefficients are written separately with the same operator since they correspond to different atoms in the molecule, even though they have the same interaction. The FCI Hamiltonian in Eq. (11) can also be written in matrix form

$$\mathcal{H}_{FCI} = \begin{bmatrix} c_0 + c_1 + c_2 + c_3 + c_5 & 0 & 0 & c_4 \\ 0 & c_0 - c_1 + c_2 - c_3 + c_5 & c_4 & 0 \\ 0 & c_4 & c_0 + c_1 - c_2 - c_3 + c_5 & 0 \\ c_4 & 0 & 0 & c_0 - c_1 - c_2 + c_3 + c_5 \end{bmatrix}$$

$$(12)$$

As detailed before, one starts from a driving Hamiltonian that should be easy to prepare. For this particular problem, the Hartree-Fock (HF) approximation Hamiltonian, Eq. (13) given below is used, with its matrix form written in Eq. (14). It is easy to see that both the FCI and the HF Hamiltonian are real-valued since they are composed only with the identity matrix, $I$, and the Pauli matrices $\sigma_X$ and $\sigma_Z$.

$$H_{HF} = p_0 I^{(1)} \otimes I^{(2)} + p_1 I^{(1)} \otimes \sigma_Z^{(1)} + p_2 \sigma_Z^{(1)} \otimes I^{(2)} + p_3 \sigma_Z^{(1)} \otimes \sigma_Z^{(1)} + p_4 I^{(1)} \otimes I^{(2)}.$$

$$(13)$$

$$\mathcal{H}_{HF} = \begin{bmatrix} p_0 + p_1 + p_2 + p_3 + p_4 & 0 & 0 & 0 \\ 0 & p_0 - p_1 + p_2 - p_3 + p_4 & 0 & 0 \\ 0 & 0 & p_0 + p_1 - p_2 - p_3 + p_4 & 0 \\ 0 & 0 & 0 & p_0 - p_1 - p_2 + p_3 + p_4 \end{bmatrix}$$

$$(14)$$

By incorporating the adiabatic operator defined in Eq. (9) into the total Hamiltonian operator described in Eq.

$$H(t) := H_{AD}(t) + \frac{d\lambda}{dt} A_{CD}(t) \ , A_{CD}(t) := i\hbar \sum_n (\nabla_\lambda n) \langle n \vee -\langle n \vee \nabla_\lambda n \rangle \vee n \rangle \langle n). \quad (15)$$

Considering that the initial and final Hamiltonians are represented as shown in Eq. (12) - (15) with $H_{initial} := H_{HF}$ and $H_{final} := H_{FCI} = H_{problem}$, one can establish the following PDE,

$$H(t) := \left(1 - \lambda(t)\right)H_{HF} + \lambda(t)H_{problem} + \frac{d\lambda}{dt}A_{CD}(t). \tag{16}$$

The method of the invention may involve employing a PINN that incorporates a neural network structure comprising multiple fully connected dense layers, with the total number of layers denoted as K. This includes both the input and output layers. Each layer consists of a variable number of neurons, represented by $N_k$, and is characterized by a common output activation function denoted as $\sigma_k$. This activation function remains consistent across all neurons within a given layer after it is specified. Let $W^{(k)} \in R^{N_k \times N_{k-1}}$ be the weight matrix connecting the (k - 1)-th layer to the k-th layer, and $b^{(k)} \in R^{N_k}$ be the bias vector for the k-th layer.

Consequently, the output of the k-th layer, denoted as $U_\Theta^{(k)}$, can be expressed as the application of the activation function $\sigma_k$ to the weighted sum of the output of the previous layer, followed by the addition of the biases, as denoted in Eq. (17).

$$U_\Theta^{(k)} = \sigma_k \left( W^{(k)}U_\Theta^{(k-1)} + b^{(k)} \right). \tag{17}$$

In this manner, contingent upon the specific problem under consideration, additional network parameters beyond weights and biases may be taken into account. Nevertheless, if only these two sets are considered, the trainable variables would be limited to those typically found in a conventional network, denoted as $\Theta := \{W^{(k)}, b^{(k)}\}_{1 \leq k \leq K}$. Regarding the activation functions, particularly those employed at the output layer, they need to be tailored to suit the requirements of the specific physical problem at hand. For instance, certain physical variables may exhibit limitations within a defined range of values. An example of such a case is the scheduling function as described in Eq. (16), which is constrained to the interval [0,1] by definition, or the velocity of a specific fluid within relativistic scenarios which is subject to an upper limit that cannot surpass the speed of light. In the context of our specific problem, the sole independent variable is time, thereby allowing us to exclude spatial dimensions as inputs to the neural model. Consequently, by considering Eq. (17) and the time interval $t \in [0, T]$, one can express the ensemble of output variables of the architecture in the following manner.

$$U(t) \approx U_\Theta(t) = \sigma_K \left( U_\Theta^{(K)} \circ \sigma_{K-1} \circ U_\Theta^{(K-1)} \circ ... \circ \sigma_1 \circ U_\Theta^{(1)} \right)(t) \tag{18}$$

Eq. (18) showcases the mathematical representation of the approximation proposed by the underlying neural network in the method of the invention. This approach aims to closely resemble the actual physical solution following the completion of the training process. In this context, the symbol $\circ$ represents the composition operator. Recent research in the field asserts that PINNs enhance their performance by incorporating dynamic activation functions that vary with the training process and are distinct for each neuron. However, our focus lies primarily on establishing the definition of physical inductive biases within the network. Consequently, each layer k will be associated with an activation function denoted as $\sigma_k$, which uniformly affects the output tensor of that particular layer.

Inductive biases and optimization

The method of the invention involves, in certain embodiments, employing a method based on PINNs, which allows us to incorporate strong inductive biases and a priori knowledge into the neural network. This incorporation is intended to ensure that the underlying physics governing the problem is adequately satisfied. To achieve this, it is important to consider that the output of the underlying network in the method of the invention will consist of a set of variables denoted as

$$U_\Theta(t) := (\lambda, A_{CD}, C)_\Theta \tag{19}$$

Henceforth, the utilization of the symbol $\Theta$ to denote the network prediction will be omitted and presumed understood, except in cases where the terminology may potentially result in misconceptions.

Here, $\lambda \in R$ denotes the scheduling function, while $A_{CD} \in M_{2^{N_Q} \times 2^{N_Q}}(C)$ represents the counter-diabatic terms of the evolution, and $C \in R^{4^{N_Q}}$ correspond to the set of coefficients in which these counter-diabatic terms can be linearly decomposed attending to all the possible tensors that come from the Kronecker products of the possible combinations according to both the number of qubits considered and the set of identity and Pauli matrices, $\{I, \sigma_X, \sigma_Y, \sigma_Z\}$. In general, $A_{CD}$ is an operator composed of complex terms and will be of size $2^{N_Q} \times 2^{N_Q}$ with $N_Q$ being the number of qubits into consideration. Moreover, notwithstanding that the dependency may not always be explicitly stated, all variables emerging from the PINN are contingent upon the input time. Hence, the network yields solutions for each of the considered inference times.

The underlying neural network will be optimized using the so-called "soft enforcement" technique. One can adapt this method to the specific scenario of Hamiltonian dynamics, where the global cost function can be decomposed into multiple terms. Specifically, the initial and final time conditions are addressed here for an input time interval $t \in [t_{min}, t_{max}]$ as described in Eq. (20) and (21), respectively.

$$L_{IC} := \frac{\omega_{IC,1}}{N_{IC}} \sum_{\{t_{min}\}} |\lambda(t_{min})|^2 + \frac{\omega_{IC,2}}{N_{IC}} \sum_{\{t_{min}\}} |H(t_{min}) - H_{HF}|^2, \qquad (20)$$

$$L_{FC} := \frac{\omega_{FC,1}}{N_{FC}} \sum_{\{t_{max}\}} |\lambda(t_{max}) - 1|^2 + \frac{\omega_{FC,2}}{N_{FC}} \sum_{\{t_{max}\}} |H(t_{max}) - H_{problem}|^2. \qquad (21)$$

In the definitions above, $(\omega_{IC,1}, \omega_{IC,2})$ and $(\omega_{FC,1}, \omega_{FC,2})$ are the weights of the mixture in the calculation of the total loss function and whose values will depend on the knowledge applied as well as the problem being treated, while $N_{IC}$ and $N_{FC}$ represent the number of sample points at the initial and final instants, respectively. Regarding the scheduling function of the problem, denoted as $\lambda(t)$, this function shall delineate the progression of physical states subsequent to the introduction of counter-diabatic terms as stipulated in Eq. (16). At the initial time instant, a condition is imposed where $\lambda(t_{min})$ equals zero, i.e., $\lambda(t_{min}) = 0$. Similarly, at the terminal time instant, one would prescribe that $\lambda(t_{max})$ assumes a value of one, i.e., $\lambda(t_{max}) = 1$, as per its formal definition. The aforementioned conditions outlined correspond to the physical limitations that are inherently necessary to be satisfied within our specific scenario. At the initial moment, denoted as $t = t_{min}$, the scheduling function is enforced to be zero, while ensuring that the resulting Hamiltonian operator Eq. (16) is equivalent to the one obtained through the Hartree-Fock method, defined as $H(t_{min}) = H_{HF}$. Additionally, by incorporating counter-diabatic terms, our intention is to accelerate the adiabatic transition and reduce the computational complexity of the underlying circuits.

This, however, does not impede the knowledge of the final Hamiltonian operator, denoted as $H_{problem}$, which can be computed via advanced numerical methods in the chemistry field. These conditions, combined with the requirement that the scheduling function must be equal to one at the conclusion of the evolution, collectively constitute the final conditions mandated by the method of the invention.

After establishing the initial and final inductive biases explicitly, the physics governing the intermediate time periods within the interval is elucidated. Upon acquiring all the aforementioned components, the necessary elements are present to construct the complete Hamiltonian operator for the given problem, as delineated in Eq. (16). However, for the purpose of coherence, the expression is reiterated here to avoid any disruption in the logical progression.

$$H(t) = H_{AD}(t) + \frac{d\lambda}{dt} A_{CD}(t), \text{ with } H_{AD}(t) := \left(1 - \lambda(t)\right) H_{HF} + \lambda(t) H_{problem}. \qquad (22)$$

It is obvious that the operators should possess Hermitian properties. Furthermore, it is imperative to impose the condition that the neural network yields the solution for the Gauge potential (counter-diabatic terms) that achieves the utmost reduction in the physical action within the given scenario. This entails selecting the solution that results in achieving

$$\frac{\delta S(A_{CD})}{\partial A_{CD}} = 0. \qquad (23)$$

The minimization of the physical action represents a crucial requirement for ensuring that the employed method yields an optimal operator $A_{CD}(t)$ under specific conditions, encompassing local temporary development, robustness, availability, and experimental accessibility, among other factors. Research studies have demonstrated the impact of the action in recovering the Euler-Lagrange equation. Consequently, demanding the neural network to minimize the action is entirely equivalent to defining the term associated with the physical loss, as described in Eq. (24). Moreover, the temporal rate of change of the scheduling function, denoted as $\frac{d\lambda}{dt} := \lambda$, represents the velocity or rate at which the non-adiabatic components drive the evolution of the system in the presence of the total Hamiltonian operator. Consequently, when the derivative approaches zero, i.e., $\lambda = 0$, the conventional adiabatic Hamiltonian is recovered. However, it is undesirable for the counter-diabatic terms to greatly surpass the adiabatic counterparts, as their purpose is to expedite the process without exerting dominant influence. Hence, it is essential that the time derivative of $\lambda$ remains small, yet not entirely nullified. This particular information must be communicated to the PINN through Eq. (24).

$$L_{Least\ Action} := \frac{\omega_{Action}}{N_F} \sum_{(t_{min}, t_{max})} \left[ i \frac{\partial H_{AD}(t)}{\partial \lambda} - [A_{CD}(t), H_{AD}(t)], H_{AD}(t) \right]. \quad (24)$$

$$L_{Adiabaticity} := \frac{\omega_{Ad}}{N_F} \sum_{(t_{min}, t_{max})} \left| \frac{d\lambda}{dt} \right|^2. \quad (25)$$

The set $\{\sigma_0, \sigma_X, \sigma_Y, \sigma_Z\} \in M_{2 \times 2}(C)$ form an orthogonal basis of the Hilbert space of $2 \times 2$ Hermitian matrices. The computation of the operator $A_{CD}$ is seen as a composite of tensor products involving the previously introduced Pauli matrices for a certain system of qubits.

Thereby, it is possible to construct a linear combination of tensor products involving these matrices, yielding a set of coefficients denoted as $C \in R^{4^{N_Q}}$. Each element within this set represents the relative magnitude of each term within the operator. Therefore, the decomposition expressed in Eq. (26) enables performing efficient simulations and facilitates a more accessible analysis of physical systems through the utilization of quantum circuit models.

$$A'_{CD}(t) := \sum_{i,j,...,N_Q \in \{0,X,Y,Z\}} C_{i,j,...,N_Q}(t) \left( \sigma_i \otimes \sigma_j \otimes ... \otimes \sigma_{N_Q} \right). \quad (26)$$

In this example, $A'_{CD}(t)$ is employed to represent the non-adiabatic terms. This notation serves to distinguish this expansion, which takes the form of a linear combination, from the operator that serves as an output of the PINN. To achieve this, it is advantageous to introduce an additional term into the loss function of the neural network, which directly affects the set of coefficients denoted as $C(t)$ (see Eq. (27)). Consequently, these terms are dynamically adjusted during the training process in order to construct the decomposition of the Gauge operator. By employing the specified procedure and adhering to the prescribed requirement, the method exhibits the capability to yield these scalar quantities not only at the initial and final moments but also throughout the entire temporal interval. This is attributable to the fact that these scalars, in a general sense, are functions contingent upon time.

$$L_{Coupling} := \frac{\omega_{Coupling}}{N_F} \sum_{(t_{min}, t_{max})} \left| A_{CD}(t) - A'_{CD}(t) \right|^2. \quad (27)$$

Once all the requisite components have been specified (Eq. (24), (25), (26)), it becomes feasible to establish the loss term for our PINN (Eq. (28)), which is solely linked to the underlying differential equations. In this context, the vector ($\omega_{Action}, \omega_{Adiabaticity}, \omega_{Ccoupling}$) denotes the weights employed in the combination process when constructing the resultant term. Thus, by considering Eq. (5) and acknowledging the pre-established mixture weights within our loss terms, the formulation of the final loss function Eq. (29) becomes straightforward. This incorporates the loss associated with the partial differential equations (PDEs) outlined in Eq. (28), as well as the temporal constraints at the initial and final temporal steps Eq. (20), (21). Consequently, the defined loss function may serve as the physical metric that guides the optimization process, leading the objective for the neural network within the method to minimize.

$$L_F := L_{LeastAction} + L_{Adiabaticity} + L_{Coupling}. \quad (28)$$

$$L := L_{IC} + L_{FC} + L_F. \quad (29)$$

In addition, the network has not explicitly been required to satisfy the necessary condition of operators hermiticity even though it can be achieved by including an additional term in Eq. (28) that minimizes the difference $\left| A_{CD} - A_{CD}^\dagger \right|^2$.

Nonetheless, such a restriction is not obligatory and would be redundant for the PINN. If the coefficients $C \in R^{N_Q}$ are defined as real, i.e., $C = C$, then it is evident from the decomposition of $A'_{CD}$ in Eq. (26) that recovered

$$A'_{CD} - A'^{\dagger}_{CD} = 0$$ naturally, without necessitating any additional requirements. Therefore, the physical condition expressed in Eq. (27) is more than sufficient for the neural network to ensure the hermiticity of the operator $A_{CD}$, and since

$$H_{HF}, H_{problem} \in M_{2^{N_Q} \times 2^{N_Q}}(R)$$ , the hermiticity of the complete Hamiltonian operator is also ensured.

**Algorithm 1**: PINN algorithm for the **counter-diabatic (CD) driving** of a system of $N_Q$ qubits.

**Input:** Physical domain: $t \in [t_{min}, t_{max}]$.

**Output:** Set of variables produced by the PINN comprising the scheduling function, the operator controlling the counter-diabatic terms, and the coefficients of its associated Pauli decomposition, denoted as

$$U_\theta(t) = \sigma_K\left(U_\theta^{(K)} \circ \sigma_{K-1} \circ U_\theta^{(K-1)} \circ ... \circ \sigma_1 \circ U_\theta^{(1)}\right)(t)$$ .

1) **Specify the training domain:** Generate the temporal interval $t$ using *Sobol* sequence.

2) **Construct the underlying neural network** as a densely connected architecture consisting *of K* layers, with a specific number of neurons per layer. Initialize the trainable parameters of the network, denoted as $0 = W^{(k)}, b^{(k)} 1 \leq k \leq K$, using the Glorot initialization method.

3) **By employing the principles of automatic differentiation,** compute the derivative $\frac{d\lambda}{dt}$ from the output and subsequently construct the operator $H(t)$ in accordance with the expression (16).

4) **Construct the initial and final losses in time** using the MSE metric as $L_{IC}$, Eq. (20) and $L_{FC}$, Eq. (21), respectively.

5) **Derive the comprehensive set of physical loss terms** associated with the differential equations, $L$, incorporating considerations for the Principle of Least Action, adherence to adiabatic conditions, the decomposition in terms of Pauli tensor products and the hermiticity of the physical operators as a direct consequence. Subsequently, formulate the aggregate physical loss as follows:

$$L := L_{IC} + L_{FC} + L_F.$$

6) **Update the set of network variables** by backpropagation, $\{W^{(k)}, b^{(k)}\}_{1 \leq k \leq K}$, that minimizes the total loss using a certain defined optimizer: $\Theta := argmin(L(\Theta))$.

7) **Repeat steps 3-6 for the required number of epochs** until the convergence is as desired or a maximum number of iterations is reached.

**Claims**

1. Computer-implemented method for solving an optimization problem, in particular in a chemical system using a quantum computer, comprising:

   (a) training a Physics-Informed Neural Network (PINN) using a plurality of training samples to address a Counter-Diabatic driving problem in a quantum system, wherein training the PINN comprises

   - defining a temporal domain as the input of the PINN,
   - constructing the PINN on the basis of the temporal domain,
   - obtaining outputs from the PINN and derivating them,
   - optionally, updating the temporal domain with derivated outputs;
   and

   (b) obtaining a set of counterdiabatic terms as the solution for the counter-diabatic driving problem from the PINN;
   (c) differentiating at least one partial differential equation characterizing a time-dependent behavior in the chemical system;
(d) minimizing a loss function and
(e) solving, using the set of counterdiabatic terms, to solve the optimization problem, in particular in the chemical system.

2.  Method of claim 1, wherein the PINN provides optimal counter-diabatic terms.

3.  Method of claim 1 or 2, wherein the output of the PINN comprises:

    - a countediabatic gauge potential operator $A_{CD}(t)$,
    - a scheduling function $\lambda(t)$, and
    - a set of coefficients $C(t)$ of a decomposition of the gauge potential operator.

4.  Method of claim 3, wherein the potential gauge operator contains the set of counterdiabatic terms.

5.  Method of any of claims 1 to 4, comprising:
    determining a total temporal evolution of an energy level of the quantum system.

6.  Method of any of claims 1 to 5, wherein employing the counter-diabatic driving increases a separation between the quantum system's ground state $E_0$, and its first excited level $E_1$.

7.  Method of any of claims 1 to 6, wherein the optimization problem in a chemical system refers to finding the ground state of a given molecule.

8.  Method of any of claims 1 to 7, wherein solving the optimization problem comprises counterdiabatic (CD) driving wherein the set of CD terms is used to optimize the result to the optimization problem.

9.  Method of any of claims 1 to 8, wherein at least one partial differential equation characterizing a time-dependent behavior of the chemical system is selected from the group consisting of time-dependent energy equations.

10. Method of any of claims 1 to 9, wherein the updating of the temporal domain with derivated outputs is performed until a maximum number of iterations or a defined convergence is reached.

11. A system comprising

    at least one processor, and
    a physics-informed neural network trainer implemented on at least one processor and configured to perform operations comprising:
    training a physics-informed neural network (PINN) using a plurality of training samples, wherein training the physics-informed neural network comprises:
    differentiating at least one partial differential equation characterizing a time-dependent behavior of a chemical system; and
    minimizing a loss function specifying an error of the physics-informed neural network with respect to the training samples by assigning a plurality of weights in a residual loss value to account for physical causality in the partial differential equation; and
    predicting, using the physics-informed neural network, a conformation of a molecule with minimum energy of the chemical system.

12. A data processing apparatus or system comprising means for carrying out the steps of the method of any of claims 1 to 10.

13. A computer program [product] comprising instructions which, when the program is executed by a computer, cause the computer to carry out the steps of the method of any of claims 1 to 10.

14. A computer-readable [storage] medium comprising instructions which, when executed by a computer, cause the computer to carry out the steps of the method of any of claims 1 to 10.

**Figure 1**

**Figure 2**

**Figure 3**

**Figure 4**

**Figure 5**

**Figure 6**

**Figure 7**

**Figure 8**

**Figure 9**

**Figure 10**

**Figure 11**

**Figure 12**

100

TRAINING SYSTEM
102

PROCESSOR(S)
106

MEMORY
108

TRAINING SAMPLES
110

PINN TRAINER
112

PRODUCTION SYSTEM
104

PROCESSOR(S)
114

MEMORY
116

PINN MODEL
118

MOVEMENT PREDICTOR
120

Europäisches
Patentamt
European
Patent Office
Office européen
des brevets

## EUROPEAN SEARCH REPORT

Application Number

EP 24 16 3901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAO JIAHAO ET AL: "Reinforcement Learning for Many-Body Ground-State Preparation Inspired by Counterdiabatic Driving", PHYSICAL REVIEW X, [Online] vol. 11, no. 3, 3 October 2021 (2021-10-03), XP093176370, US ISSN: 2160-3308, DOI: 10.1103/PhysRevX.11.031070 Retrieved from the Internet: URL:https://arxiv.org/pdf/2010.03655> [retrieved on 2024-06-20] * abstract * * page 1, left-hand column, line 1 - page 10, right-hand column, last line * * page 14, left-hand column, line 2 - page 34, last line * | 1-14 | INV. G06N10/20 G06N3/042 G06N10/60 G06N3/084 G06N10/70 |
| A | FERRER-SÁNCHEZ ANTONIO ET AL: "Gradient-annihilated PINNs for solving Riemann problems: Application to relativistic hydrodynamics", COMPUTER METHODS IN APPLIED MECHANICS AND ENGINEERING, [Online] vol. 424, 19 May 2023 (2023-05-19), page 116906, XP093176372, AMSTERDAM, NL ISSN: 0045-7825, DOI: 10.1016/j.cma.2024.116906 Retrieved from the Internet: URL:https://arxiv.org/pdf/2305.08448> [retrieved on 2024-06-20] * abstract; figure 2 * * page 1, line 1 - page 23, last line * | 1-14 | |

TECHNICAL FIELDS
SEARCHED (IPC)

G06N

The present search report has been drawn up for all claims

| Place of search | Date of completion of the search | Examiner |
|---|---|---|
| The Hague | 26 June 2024 | Totir, Felix |

EPO FORM 1503 03.82 (P04C01)

-/--

Europäisches
Patentamt

European
Patent Office

Office européen
des brevets

# EUROPEAN SEARCH REPORT

Application Number

EP 24 16 3901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ANTONIO FERRER-S\'ANCHEZ ET AL: "Physics-Informed Neural Networks for an optimal counterdiabatic quantum computation", ARXIV.ORG, CORNELL UNIVERSITY LIBRARY, 201 OLIN LIBRARY CORNELL UNIVERSITY ITHACA, NY 14853, 8 September 2023 (2023-09-08), XP091608619, * abstract * * page 2, line 1 - page 24, line 3 * ----- | 1-14 | |
| A | Norambuena Ariel ET AL: "Physics-informed neural networks for quantum control", arXiv (Cornell University), 13 June 2022 (2022-06-13), pages 1-14, XP093177628, DOI: 10.48550/arxiv.2206.06287 Retrieved from the Internet: URL:https://arxiv.org/pdf/2206.06287v1 [retrieved on 2024-06-25] * abstract * * page 1, left-hand column, line 1 - page 5, left-hand column, last line * * page 7, line 1 - page 14, last line * ----- | 1-14 | TECHNICAL FIELDS SEARCHED (IPC) |

The present search report has been drawn up for all claims

| Place of search | Date of completion of the search | Examiner |
|---|---|---|
| The Hague | 26 June 2024 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)